# EUROPEAN PATENT APPLICATION

(11) **EP 1 376 733 A2**
(43) Date of publication of application: **02.01.2004**
(21) Application number: 03016665.6
(22) Date of filing: 20.03.1998
(51) Int. Cl.: H01M 10/50

(54) **Cooling device for battery power source**

(30) Priority: 24.03.1997 JP 6995697; 24.03.1997 JP 6995797
(62) Divisional of application: 98302116.3
(71) Applicant: MATSUSHITA ELECTRIC INDUSTRIAL CO., LTD., Kadoma-shi, Osaka 571-0050 (JP); Toyota Jidosha Kabushiki Kaisha, Aichi-ken, 471-0826 (JP)
(72) Inventor: Kouzo, Katsumi, Kadoma-shi, Osaka 571-0050 (JP); Marukawa, Shuuhei, Kadoma-shi, Osaka 571-0050 (JP); Kobayashi, Takaki, Kadoma-shi, Osaka 571-0050 (JP); Kakino, Manabu, Kadoma-shi, Osaka 571-0050 (JP); Etoh, Toyohiko, Toyota-shi, Aichi-ken 471-0826 (JP); Fukao, Yasuyoshi, Toyota-shi, Aichi-ken 471-0826 (JP); Kanamaru, Kunio, Toyota-shi, Aichi-ken 471-0826 (JP); Watanabe, Koh, Toyota-shi, Aichi-ken 471-0826 (JP); Inui, Kiwamu, Toyota-shi, Aichi-ken 471-0826 (JP)
(74) Representative: Rackham, Stephen Neil

(57) **Abstract**

A battery power source comprising a cooling device and a large number of battery modules (9), constituted by a plurality of single cells (7) connected in a row electrically and mechanically in series, arranged parallel to each other and held in a holder casing (10) wherein air is forcibly made to flow in one direction within said holder casing (10) thereby cooling the large number of battery modules (9) in said holder casing (10), the direction of flow of the air is in a direction at right angles to the longitudinal direction of said battery modules (9), and wherein means for flow alignment are arranged within said holder casing (10) such that the flow speed of the air flowing through said holder casing (10) is faster on the downstream side than on the upstream side.

## Description

The present invention relates to a battery power source device, used as a motor drive source or the like for an electrically powered automobile, comprising a cooling device that cools this battery power source device by air cooling.

In a known type of battery power source of this kind, a large number of battery modules constituted by connecting electrically and mechanically in series a row consisting of a plurality of single cells are arranged in parallel and held in a holder casing. High voltage power is extracted by connecting these battery modules electrically in series.

The present inventors developed a battery power source device wherein a large number of battery modules are arranged in parallel in a holder casing comprising a main casing body and two end plates, series electrical connection between the battery modules being achieved by holding ends of the battery modules in holding apertures provided in the end plates and locking the ends of the battery modules to a metal bus bar arranged on the outside face of the end plates.

However, with this prior example, there was the serious problem of how to restrain the rise in temperature produced by evolution of heat from the battery modules tightly packed in the holder casing.

Also, an arrangement is known in which high voltage power is supplied in an electrically powered automobile by mounting therein battery power source assemblies comprising a pair of battery power source devices electrically connected in series. However, in this case, efficient cooling of the battery power source devices presented a serious problem.

In order to suppress rising temperature brought about by evolution of heat from the batteries in the above battery power source device, the inventors modified the design of the holder casing and developed a cooling device having an air flow guide such as to make a suitable amount of cooling air flow along the battery modules.

However, with this prior example, not only was it difficult to suitably distribute the flow of air in regard to the battery modules but also it was difficult to effect uniform cooling between the single cells connected in series to constitute the individual battery modules. specifically, the air flowing along the battery modules rises in temperature due to the heat received from the single cells whilst it is flowing from the upstream side to the downstream side, causing its cooling effect to gradually diminish. Thus it was extremely difficult to compensate for this by individually controlling the air flow rate and air flow speed for each individual battery module in order to achieve uniform cooling of the individual unit cells from the upstream side to the downstream side.

A main object of the present invention is therefore to solve the problems of the prior examples and to provide a cooling device of a comparatively simple structure whereby cooling of a battery power source assembly comprising a pair of battery power source devices can be achieved in an efficient manner.

In order to solve the above problems, according to the present invention, a battery power source comprising a cooling device and a large number of battery modules constituted by a plurality of single cells connected in a row electrically and mechanically in series, arranged parallel to each other and held in a holder casing, wherein air is forcibly made to flow in one direction within this holder casing thereby cooling the large number of battery modules in the holder casing the direction of flow of the air is a direction at right angles to the longitudinal direction of the battery modules, and wherein means for flow alignment are arranged within the holder casing such that the flow speed of the air flowing through the holder casing is faster on the downstream side than on the upstream side.

Preferably, at a location on the downstream side in the holder casing, the flow path area is progressively diminished such that the flow speed of air flowing through the holder casing gradually becomes larger in the direction of flow of the air.

By adopting such a construction, the flow speed of the air flowing from the upstream side to the downstream side can be gradually increased, so that the cooling effect is raised practically in proportion to the square root of the flow speed, so it is possible to compensate for the diminution of cooling effect brought about by the rise in temperature of the air occurring whilst it flows from the upstream side to the downstream side, so that all the battery modules are subjected to practically uniform cooling.

According to the invention a construction may be adopted wherein, a battery power source comprising a cooling device and a large number of battery modules constituted by a plurality of single cells connected in a row electrically and mechanically in series, arranged parallel to each other and held in a holder casing, wherein air is forcibly made to flow in one direction within this holder casing thereby cooling the large number of battery modules in the holder casing the direction of flow of the air is a direction at right angles to the longitudinal direction of the battery modules, and wherein means for flow alignment are arranged within the holder casing such that the flow speed of the air flowing through the holder casing is faster on the downstream side than on the upstream side, and wherein means for screening are arranged only at a location on the upstream side within the holder casing such that the area of the battery modules that is exposed to the air flowing through the holder casing becomes larger going in the direction in which air is flowing.

By means of a such a construction, overcooling of battery modules on the upstream side is prevented and the air flow can be efficiently utilised for cooling of the battery modules of the entire battery power source device and also more air can be brought into contact with the battery modules on the downstream side than with those on the upstream side so the lowering of cooling effect due to rise in temperature of the air occurring between the upstream side and the downstream side can be compensated for, making it possible to achieve practically uniform cooling of all the battery modules.

Thus by combining means for flow alignment and means for screening as described above, uniform cooling of the battery modules of the entire battery power source device can easily be achieved.

In order to solve the above problems the present invention provides a battery power source comprising a cooling device and a pair of left and right battery power source devices constituted by holding a large number of battery modules consisting of a plurality of single cells connected in a row electrically and mechanically in series arranged horizontally and parallel to each other in a holder casing, respective air supply chambers being formed below these holder casings wherein air is fed to a lower aperture of the holder casing of the respective battery power source devices through left and right air supply chambers from a pressure-feed fan so that the battery module is cooled by the air current that is discharged from an upper aperture after rising through the holder casings wherein the pressure-feed fan has two blowing ports that supply air in the direction parallel to the end plates into the respective battery power source devices, these blowing ports opening an positions close to a respective one end plate of the battery power source devices, the bottom faces of the air supply chambers being formed with a slope whereby the cross-sectional area of the flow path gradually diminishes from the one end plate side towards the other end plate side, and wherein the flow path gradually diminishes from the one end plate side towards the other end plate side, and wherein means for flow alignment are arranged within the ladder casing whereby the flow rate of the air flowing within the ladder casing is faster at the upper than at the lower side.

With the above invention, delivery of air into the left and right battery power source device can be achieved with a single pressure-feed type fan and, due to the provision of the slope, variation of the amount of air that is taken into the holder casing from the air supply chamber depending on the position in the direction from one end plate towards the other end plate in each battery power source device can be prevented.

According to the invention a battery power source comprising a cooling device and a pair of left and right battery power source devices constituted by holding a large number of battery modules consisting of a plurality of single cells connected in a row electrically and mechanically in series arranged horizontally and parallel to each other in a holder casing, respective air supply chambers being formed below said holder casing wherein air is fed to a lower aperture of the holder casing of the respective battery power source devices through left and right air supply chambers from a pressure-feed fan that the battery module is cooled by the air current that is discharged from an upper aperture after rising through said holder casings wherein the pressure-feed fan has two blowing ports that supply air in the direction parallel to the end plates into said respective battery power source devices, these blowing ports opening in positions close to a respective one end plate of the battery power source devices, the bottom faces of the air supply chambers being formed with a slope whereby the cross-sectional area of the flow path gradually diminishes from the one end plate side towards the other end plate side, and wherein means for screening are arranged in the holder casing whereby the area of the battery modules that is exposed to the air flowing through said holder casing is greater in the upper part than in the lower part.

Preferably means for screening are arranged only in a location of the bottom part in the holder casing, the means for screening being constructed such that the area of the battery modules that is exposed to the air flowing through the holder casing gradually gets larger in the direction of flow of the air.

By means of the above construction, due to the action of the means for flow alignment and means for screening, cooling of the large number of battery modules within the battery power source devices can be performed uniformly and without bias in the vertical direction. As a result, uniform cooling of all the battery modules in the two battery power source devices can be achieved.

These and other objects, features and advantages of the present invention will be apparent from the following description of the preferred embodiments of the invention in conjunction with the accompanying drawings, in which:
Fig. 1 is a diagrammatic side view showing the relationship between an automobile and a battery pack unit;
Fig. 2 is a perspective view showing an outline of a battery pack unit;
Fig. 3 is a perspective view showing a battery power source assembly;
Fig. 4 is a front view showing a battery module, Fig. 4B is a left side view thereof, and Fig. 4C is a right side view thereof;
Fig. 5 is a perspective view of a battery module in which an outer tube is shown by an imaginary line;
Fig. 6 is a cross-sectional view with part broken away showing major parts of a battery module;
Fig. 7 is an exploded perspective view of a battery power source device;
Fig. 8 is a cross-sectional view showing a battery power source device;
Fig. 9 is a cross-sectional view to a larger scale showing major parts of a battery power source device;
Fig. 10 is a front view of a first end plate seen from the side of the inner surface;
Fig. 11A is a cross-sectional view to a larger scale along the line A-A of Fig. 10 and Fig. 11B is a front view thereof;
Fig. 12 is a cross-sectional view to a larger scale along the line B-B of Fig. 10;
Fig. 13 is a front view of a second end plate seen from the side of the outer surface;
Fig. 14 is a cross-sectional view to a larger scale along the line C-C of Fig. 13;
Fig. 15 is a diagram showing how a battery module is connected;
Fig. 16 is a diagram showing how a PTC sensor is connected;
Fig. 17 is a cross-sectional view of a battery pack unit; and
Fig. 18 is an exploded perspective view of a battery pack unit.

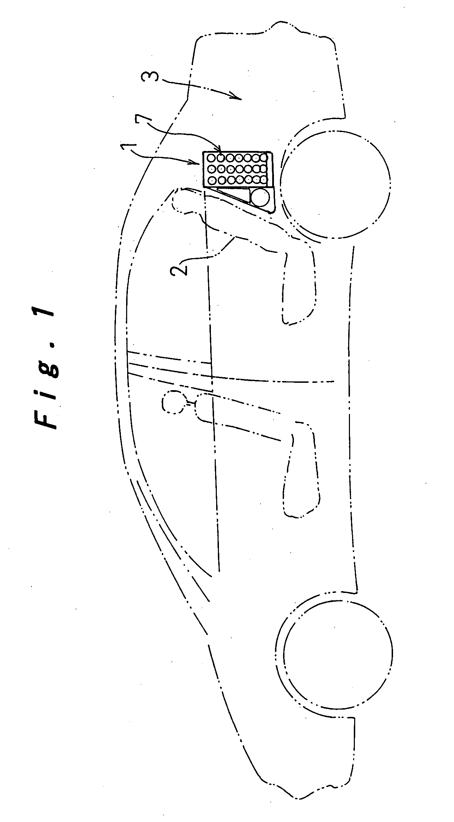

Fig. 1 shows a hybrid type automobile whose locomotive drive source is constituted by combining an internal combustion engine and a battery driven motor. In this hybrid type automobile, the internal combustion engine is operated under optimum conditions and when output is insufficient for the running conditions, this output deficiency is made up by the output of the battery driven motor; and by performing regenerative power absorption during deceleration the distance of travel per unit of fuel is enormously increased in comparison with an automobile in which an ordinary internal combustion engine is used on its own.

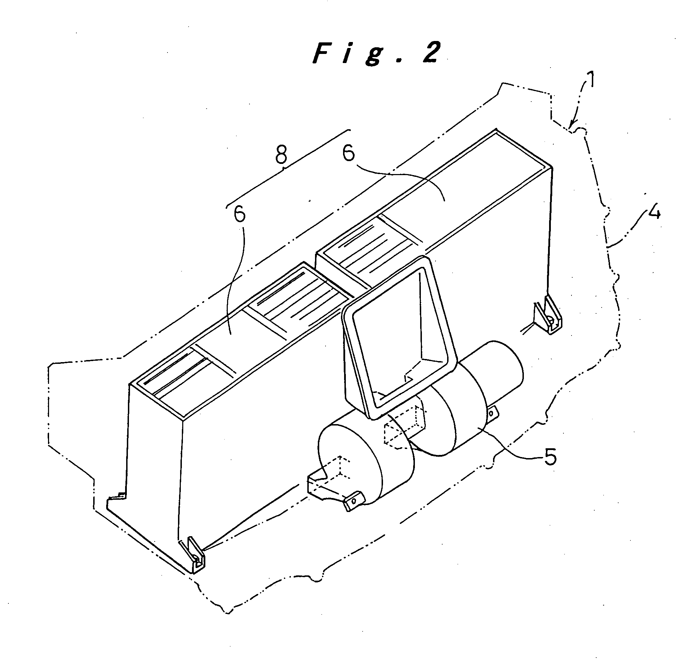

As the electric power source of the battery driven motor, nickel-hydrogen secondary cells are employed, these being accommodated in a battery pack unit 1 shown in Fig. 1 and Fig. 2. This battery pack unit 1 is arranged in the space between the rear seat 2 and the boot 3 behind it.

Battery pack unit 1 comprises an outside casing 4 consisting of a resin moulding, a fan 5 arranged therein, and a pair of left and right battery power source devices 6, 6 arranged within outer casing 4. In each battery power source device 6, there are provided 126 electrically series-connected single cells (also called battery cells) constituted by nickel-hydrogen secondary cell units; this enables power supply of voltage about 125 V. Left and right battery power source devices 6, 6 are identically constructed and are both connected electrically in series to constitute battery power source assembly 8, which is capable of supplying power of voltage about 250 V.

Specifically power of voltage about 250 V is supplied to the battery driven motor.

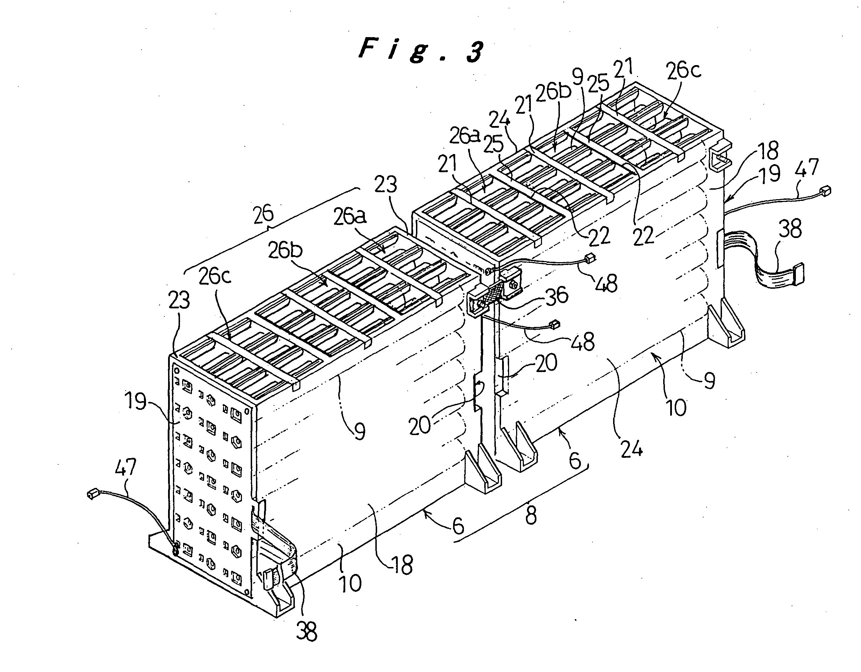

Fig. 3 shows a battery power source assembly 8 constituted of a left and right pair of battery power source devices 6, 6.

Each battery power source device 6 is constructed by holding within a holder casing 10 a total of 21 battery modules 9 arranged in parallel in three rows transversely and seven rows vertically, each module being constituted by connecting electrically and mechanically in series a row of six single cells 7.

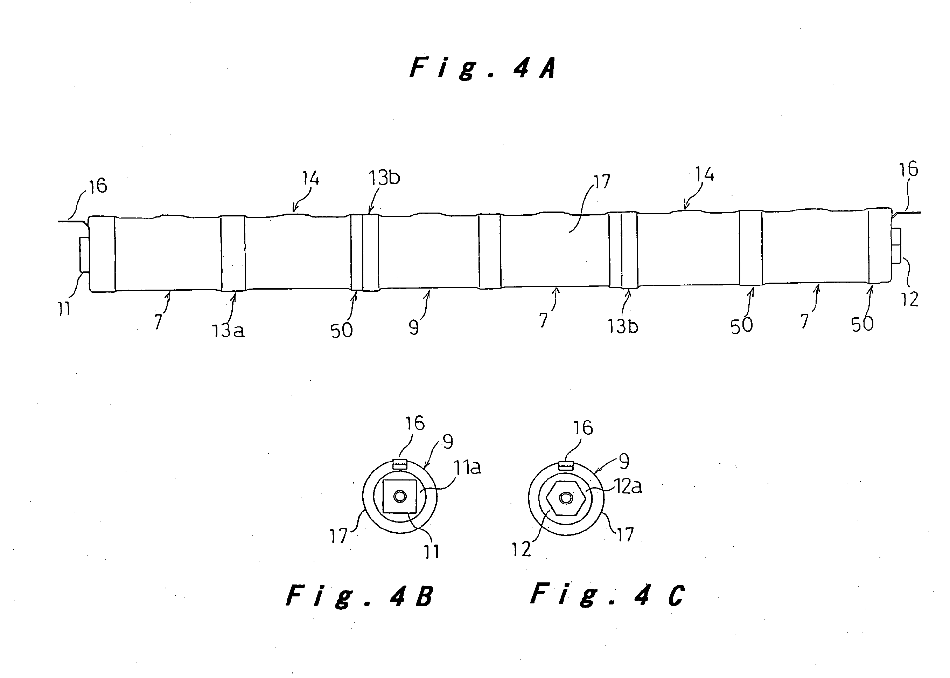

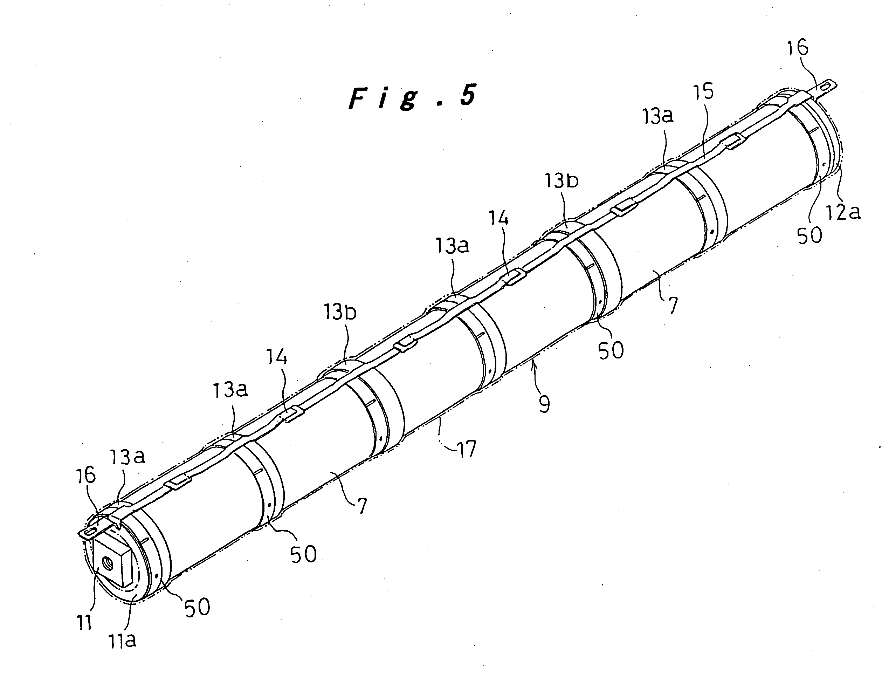

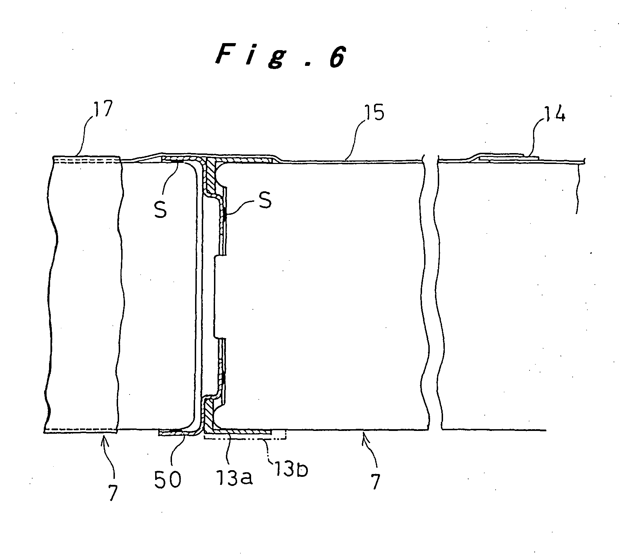

As shown in Fig. 4, Fig. 5 and Fig. 6, in a battery module 9, series connection is effected between single cells 7 using spot welds S, by means of metal connecting rings 50. Also, square nuts 11 provided with seats ha are connected to single cells 7 at the plus electrode end using spot welding by means of connecting rings 50, at the plus electrode end of battery module 9. Furthermore, hexagonal nuts 12 are connected to single cells 7 at the minus electrode end using spot welding by means of connecting rings 50 at the minus electrode end of battery module 9. The dimension between the opposite sides of square nut 11 and the dimension between the opposite sides of hexagonal nut 12 are made the same so that there is no possibility of these nuts 11 and 12 being inserted in the wrong one of a square holding recess 30a or a hexagonal holding recess 30b, to be described. Insulating rings 13a, 13b made of resin are interposed at the connecting parts in order to prevent short circuiting of the plus electrode and minus electrode in the same single cell. These insulating rings 13a, 13b are made of two types of different external diameter; of the total of six insulating rings 13a, 13b, two of these, indicated by 13b, have the larger external diameter.

A PTC (Positive Temperature Coefficient) sensor 14 is connected to the side circumferential face of each single cell 7. This PTC sensor is a temperature sensor in which abnormality is detected by an abrupt increase of electrical resistance which occurs when the temperature of a single cell 7 rises due to some internal abnormality. For example a sensor may be employed whose electrical resistance rises abruptly when a temperature of 80°C is reached. A PTC sensor may also be called a "poly sensor". Sensors other than PTC sensors may of course be used for such temperature sensor 14. Six PTC sensors 14 are connected in series by connecting wire 15, and a terminal element 16 consisting of bendable metal plate is mounted at both ends of these. The two terminal elements 16, 16 are arranged so as to project from both ends of battery module 9.

The outer peripheral surface of battery module 9 is covered by means of an outer tube 17 made of resin such as polyvinyl chloride having electrical insulation and heat shrinkage properties. PTC sensor 14 and its connecting wire 15 are protected by single cell 7 and outer tube 17. Square nut 11 constituting the plus electrode, hexagonal nut 12 constituting the minus electrode and the two terminal elements 16, 16 are exposed with respect to outer tube 17.

As shown in Fig. 3, Fig. 7 and Fig. 8, holder casing is chiefly constituted by main casing body 18, first end plate 19, second end plate 20, three cooling fin plates 21, 21, 21 and two anti-vibration rubber sheets 22, 22.

Main casing body 18 consists of a unitary resin moulding formed in the shape of a cuboidal box whose upper and lower faces are open. The space 26 formed within the two end walls 23, 23 and two side walls 24, 24 constituting four perpendicular walls is practically equally divided into three spaces 26a, 26b, 26c by two partitions 25, 25 parallel to the two end walls 23, 23. Cooling fin plates 21 are inserted from above so as to be positioned in the middle respectively of first partitioned space 26a on the side nearest the second end plate 20, second partitioned space 26b in the middle, and third partitioned space 26c on the side nearest first end plate 19, being arranged parallel to the two end walls 23, 23 and fixed to main casing body 18.

A total of 21 insertion apertures 23a, 25a, 21a in three transverse (horizontal direction) and seven vertical (vertical direction) rows for insertion of battery modules are arranged in the same corresponding positions in end walls 23, 23, partitions 25, 25 and cooling fin plates 21, 21, 21. The insertion apertures 23a, 25a, 21a in the three transverse rows and seven vertical rows are arranged with equal pitch in the transverse and vertical directions and are formed so as to have larger diameter than the external diameter of battery modules 9.

First end plate 19 is screw-fixed to end wall 23 at one end of main casing body 18, by utilising screw holes 70 at its four corners. 27 is a frame part formed at the periphery of end wall 23 of main casing body 18 as to receive first end plate 19 fitting within it. Second end plate 20 is releasably held on end wall 23 at the other end of main casing body 18. Specifically, second end plate is held fitted in a movable condition on a frame 27 formed at the other end of main casing body 18.

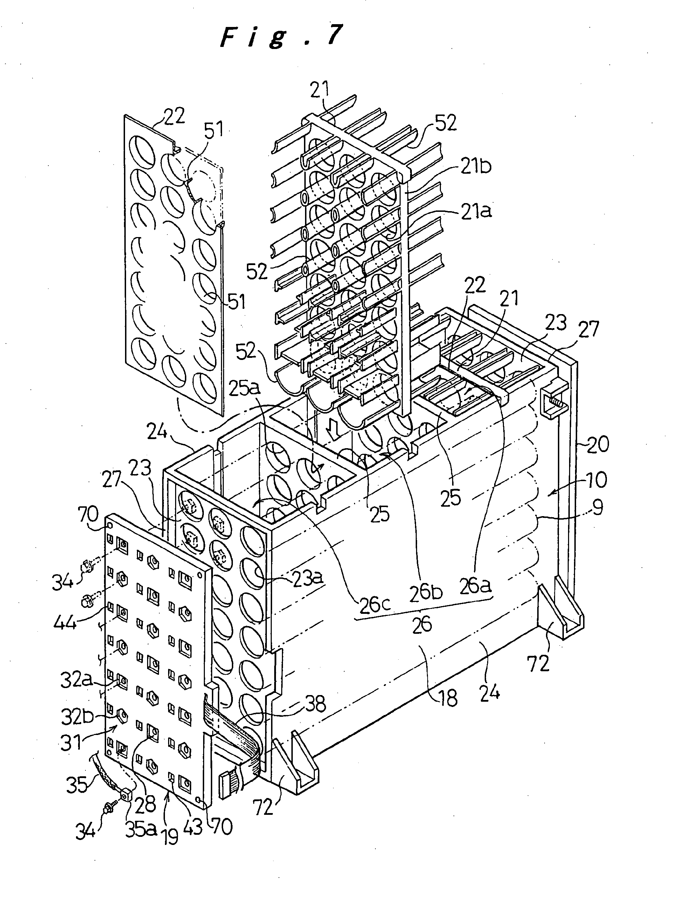

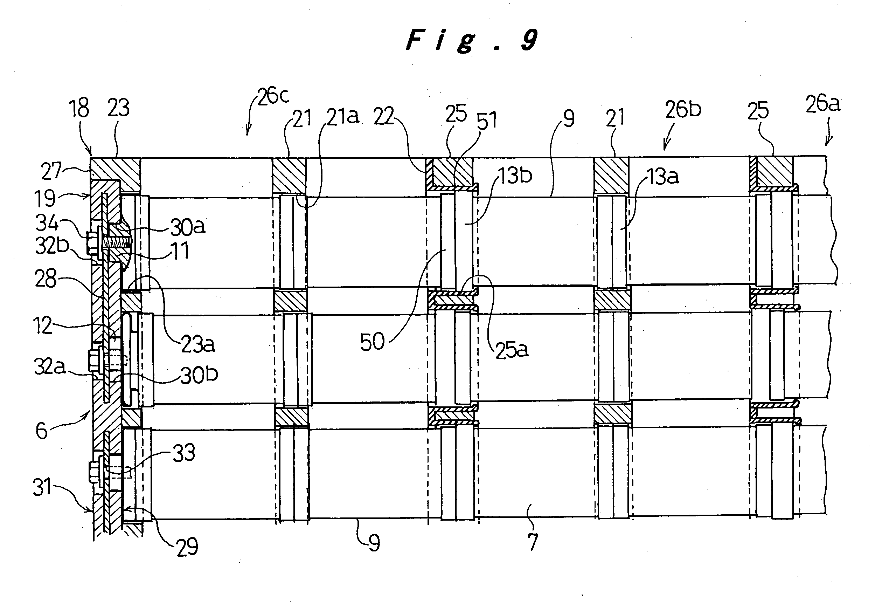

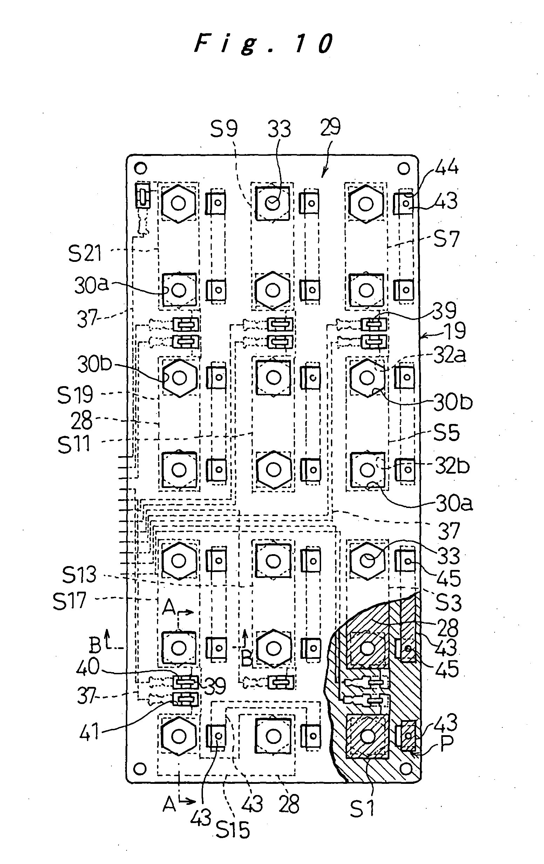

As shown in Fig. 7 ~ Fig. 12, first end plate 19 is constituted by a resin plate and has a bus bar 28 embedded and fixed in this resin plate by insertion moulding. On the inside face 29 of the resin plate there are provided square-shaped holding recesses 30a for holding, fitted therein, the square nut 11 constituting the plus electrode terminal of a battery module 9 and hexagonal-shaped holding recesses 30b for holding, fitted therein, the hexagonal nut 12 constituting the minus electrode terminal of a battery module 9. These holding recesses 30a, 30b are provided in corresponding positions to insertion apertures 23a, 25a, 21a and are provided in a total number of 21 in three transverse rows and seven vertical rows, As shown in Fig. 10, the two types of holding recess 30a, 30b are arranged alternately in a relationship such that, of adjacent recesses, one of these is a plus-side square-shaped holding recess 30a while the other is a minus-side hexagonal-shaped holding recess 30b. Holding recesses 30a, 30b are formed of such shape that nuts 11, 12 of the electrode terminals of battery module 9 fit thereinto, so square nut 11 can only be held in square holding recess 30a and the possibility of its being accidentally held in hexagonal holding recess 30b can be forestalled.

A total of 21 locking recesses 32a, 32b are formed in the outside face 31 of first end plate 19 in positions corresponding to holding recesses 30a, 30b. The shapes of these locking recesses 32a, 32b are of two types, namely, square and hexagonal: square locking recesses 32a are of exactly the same shape as square holding recesses 30a described above and hexagonal locking recesses 32b are of exactly the same shape as hexagonal holding recesses 30b described above. As shown in Fig. 10, a hexagonal locking recess 32b is provided behind square holding recess 30a and a square locking recess 32a is provided behind hexagonal holding recess 30b, respectively. The purpose of this construction is to make it possible to use in common respective identical first end plates 19, 19 of a pair of left and right battery power source devices 6, 6 constituting a battery power source assembly 8 as shown in Fig. 3. When a left-side battery power source device 6 is employed, first end plate 19 is assembled into main casing body 18 in a condition as described above but, when a right-side battery power source device 6 is employed, first end plate 19 is assembled into main casing body 18 with recesses corresponding to locking recesses 32a, 32b reversed as between the inside and outside faces so that they are employed as holding recesses 30a, 30b.

Metal bus bars 28 that effect electrical connection between the terminals of battery modules 9 are embedded and fixed by insertion moulding such as to be positioned in the middle in the thickness direction of the resin plate of first end plate 19. Bus bars 28 are exposed to the outside at portions surrounded by holding recesses 30a, 30b and locking recesses 32a, 32b.

Through-holes 33 are provided in the middle of such exposed portions.

Nuts 11, 12 at the end of a battery module 9, in a condition in which they are held fitted into holding recesses 30a, 30b, are threaded on to a bolt 3A that is inserted through-hole 33 from the side of locking recesses 32a, 32b, and by locking bolts 34, nuts 11 and 12 are electrically and mechanically locked to bus bar 28. Since square nut 11 that constitutes the plus electrode of battery module 9 is held fitted into the plus-side square holding recess 30a without any possibility of confusion, the plus electrode of battery module 9 is reliably connected to the plus portion of bus bar 28. Likewise, hexagonal nut 12 constituting the minus electrode of battery module 9 is held fitted in, without any possibility of confusion₁ in the minus-side hexagonal holding recess 30b, so the minus electrode of battery module 9 is reliably connected to the minus portion of a bus bar 28. Also, since nuts 11 and 12 are prevented from rotation by holding recesses 30a, 30b, the locking operation by means of bolt 34 can proceed smoothly.

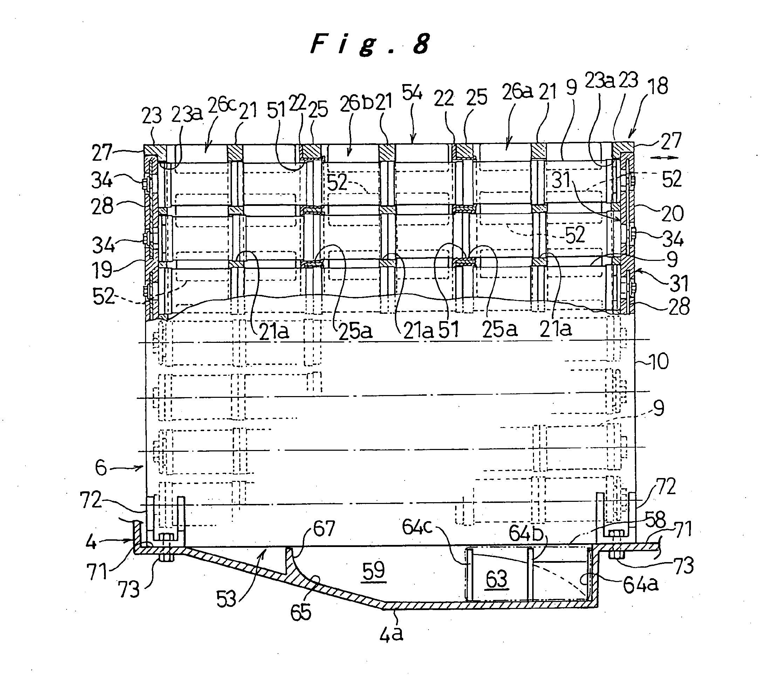

As shown in Fig. 8, Fig. 13 and Fig. 14, like first end plate 19, second end plate 20 is constituted of a resin plate and a bus bar 28 is embedded and fixed in the resin plate by insertion moulding. Its inside face 29 is provided with holding recesses 30a, 30b while its outside face 31 is provided with locking recesses 32a, 32b. Just as in the case of first end plate 19, nuts 11, 12 at the ends of battery modules 9 are electrically and mechanically locked to bus bar 28 by means of bolts 34. Hexagonal holding recesses 30b of second end plate 20 are of course arranged in locations facing square holding recesses 30a of first end plate 19, while square holding recesses 30a of second end plate 20 are arranged in locations facing hexagonal holding recesses 30b of first end plate 19.

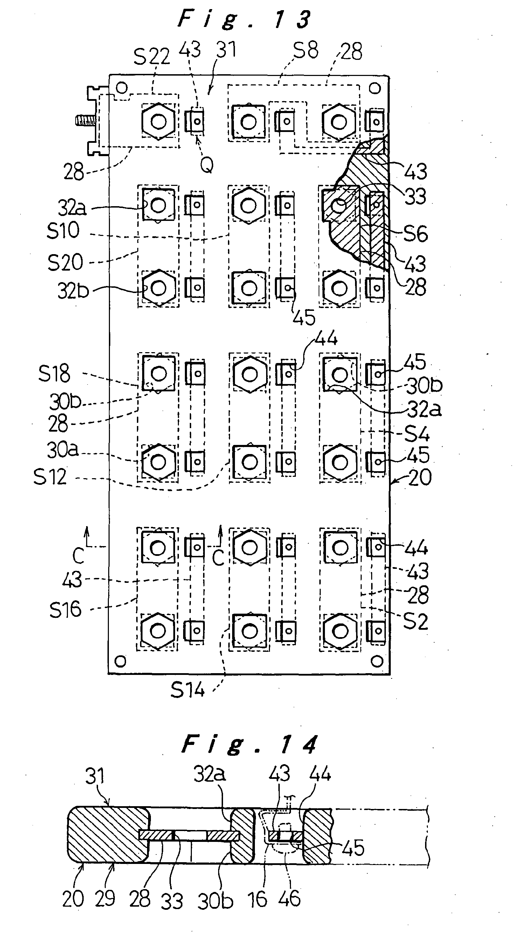

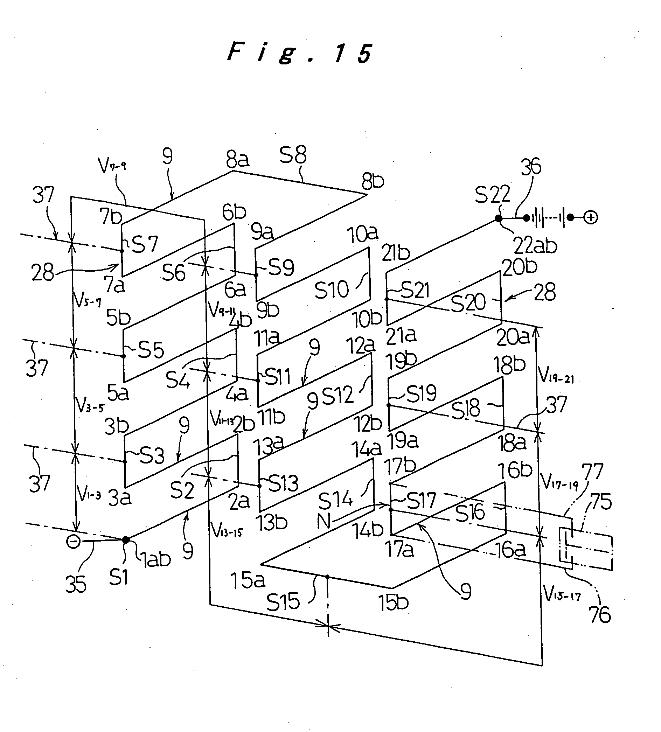

The 21 battery modules 9 which are arranged in parallel in battery power source devices 6 are electrically connected in series by means of bus bars 28 of first end plate 19 and bus bars 28 of second end plate 20. The bus bars 28 embedded and fixed in first end plate 19 are eleven in number, and are indicated in Fig. 10 by S1, S3, SS, S7, S9, S11, S13, S1S, S17, S19, and S21. The 15 bus bars 28 that are embedded in fixed in second end plate 20 are eleven in number are indicated in Fig. 13 by S2, S4, S6, S8, Sb, S12, S14, S16, S18, S20, and S22. The connection relationship of these with battery modules 9 is shown in Fig. 15.

Strictly speaking, the bus bars indicated by 31 and 32 should be called a minus terminal bar in the case of the former or a plus terminal bar in the case of the latter, rather than bus bars. Although this is not included in the concept of a bus bar according to the present invention, for convenience in description of this embodiment, they are called bus bars and will be described below. The bus bars indicated by S2 S21 have a contact with the plus electrode and a contact with the minus electrode of the battery modules 9 that are electrically adjacent in series; thus these adjacent battery modules 9 are electrically connected in series. For example as shown in Fig. 15, the bus bar indicated by S2 is provided with a plus electrode contact 2a and a minus electrode contact 2b, while the bus bar indicated by S21 is equipped with a plus electrode contact 21a and minus electrode contact 21b. The contact indicated by 1ab in Fig. 15 is the minus terminal for the entire battery power source assembly 8. To this is connected connecting end ring 35a (see Fig. 7) of motive power cable 35 connected to the battery driven motor. Also, the contact indicated by 22ab in Fig. 15 is the plus terminal of one of the battery power source devices 6. To this is connected the connecting end of a connection cable 36 (see Fig. 3) connected to the minus terminal of the other battery power source device 6. The voltage between the two contacts 1ab and 22ab is about 125 V. Connecting cable 36 has flexibility so that electrical connection between the two battery power source devices 6, 6 can be reliably performed even if there is movement of second end plate 20 due to thermal expansion/contraction of battery modules 9.

As shown in Fig. 7, Fig. 10, Fig. 12 and Fig. 15, in first end plate 19, leads 37 for measurement of the voltage between the terminals of the units of the two battery modules 9, 9 are embedded in a resin plate by insertion moulding. As shown by the single-dotted chain lines in Fig. 15, leads 37 are respectively connected to bus bars 28 indicated by S1 S3, S5, S7, S9, S11, S13, S15, S17, S19, and S21 such that the voltage V₁₋₃ between bus bars S1 and S3 for example or the voltage V₁₉₋₂₁ between bus bars S19 and S21 can be measured. Voltage V₁₋₃ indicates the voltage between the two battery modules 9, 9 that are electrically connected in series between bus bar S1 and bus bar S3, in other words the voltage across the twelve single cells 7 while the voltages V₃₋₅, V₅₋₇, ..., V₁₉₋₂₁ shown in Fig. 15 likewise indicate the voltage between the two battery modules 9, 9. By measuring these voltages, if any abnormality is detected, some abnormality will be generated in at least one of the twelve single cells 7 belonging to the corresponding two battery modules 9, 9, so countermeasures can be restricted to a comparatively narrow region.

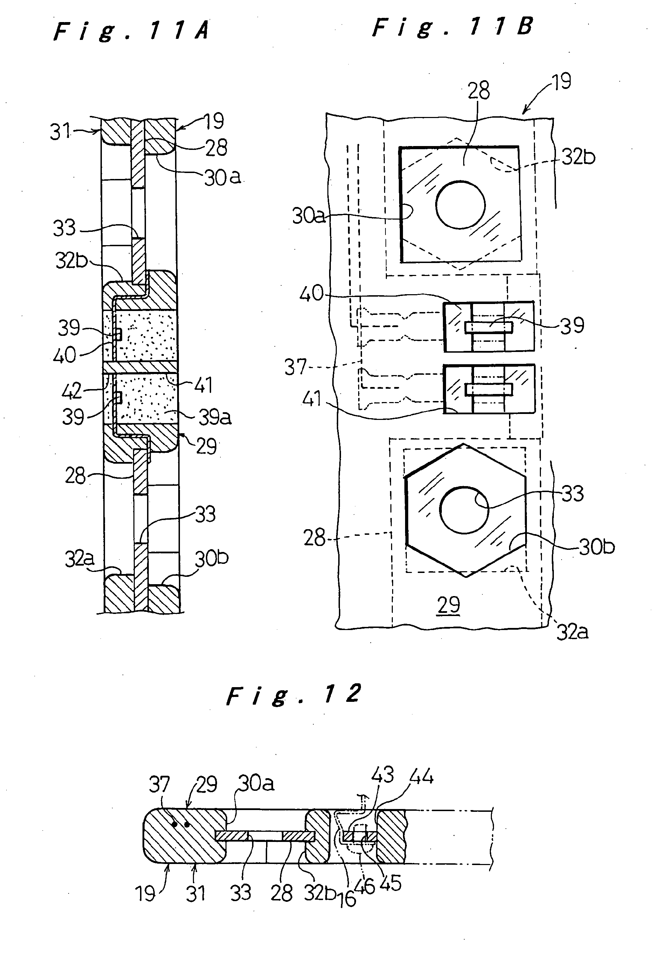

Leads 37 are arranged as shown in Fig. 10 within the resin plate of first end plate 19 and are collected into a single location on one side of first end plate 19, where they are brought together and extracted to the outside, As shown in Fig. 7, leads 37 are fixed to a resin sheet 38 in the form of a tape and lead to a voltage measurement unit. As shown in Fig. 10 and Fig. 11, excess current in leads 37 is prevented by mounting fuses 39 at the junction of leads 37 and bus bars 28. These fuses 39 are mounted by after-fixing to extensions (fuse mounting elements) 40 for lead connection provided unitarily with bus bars 28. A construction is adopted whereby the front and rear faces of the middle of extension 40 are exposed to the outside by apertures 41, 42; after producing a disconnected condition by punching through part of this extension 40 in after-processing, fuse 39 is mounted so as to electrically connect both sides of the disconnected portion (the disconnected portion is shown by an imaginary line in Fig. 11B). Resin moulding 39a is then applied to apertures 41, 42.

The wiring of leads 37 is only provided in first end plate 19, while no wiring at all is provided in second end plate 20.

As shown in Fig. 7, Fig. 10 and Fig. 12, a holding element 43 for connecting terminal element 16 of connecting wire 15 whereby six of the aforesaid PTC sensors 14 are connected in series is fixed to the resin plate by insertion moulding in first end plate 19.

Holding element 43 is provided with a screw hole 45 5 exposed at a through-hole aperture 44 provided in first end plate 19. Then, after inserting terminal element 16 into through-hole aperture 44, it is bent and, next, using a screw 46, as shown in Fig. 12, terminal element 16 is electrically and mechanically connected to holding element 43.

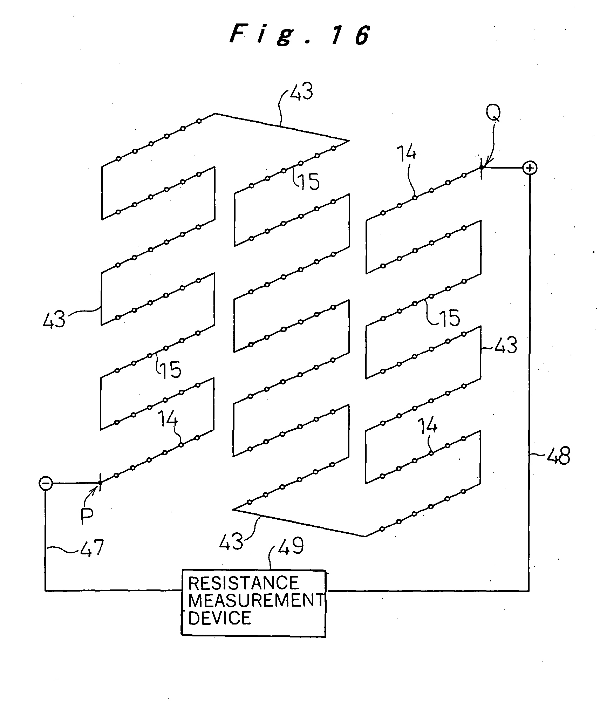

Holding element 43 is provided at both ends with two screw holes 45, 45 and acts as a bus bar effecting electrical connection of terminal elements 16, 16 of adjacent connecting wires 15. However, a holding element 15 indicated by P in Fig. 10 and Fig. 16 has only a single screw hole 45 and acts solely as the minus terminal.

A holding element 43 as described above is also fixed in second end plate 20 in the resin plate by insert forming as shown in Fig. 13. The holding element 43 of this second end plate 20 is also provided with two screw holes 45, 45 and acts as a bus bar. However, the holding element indicated by Q in Fig. 13 and Fig. 16 has only a single screw hole 45 and serves solely as a plus terminal.

Fig. 16 shows a condition in which PTC sensors 14 connected to all 126 single cells 7 that are provided in battery power source device 6 are connected electrically in series by means of holding elements 43 of first end plate 19 and second end plate 20. Since this is the same as the case where battery modules 9 shown in Fig. 15 are connected electrically in series using bus bars 28, a detailed description is omitted.

Respective external lead-out wires 47, 48 are connected (see Fig. 3) to holding element 43 constituting the minus terminal and indicated by P and to holding element 43 constituting the plus terminal and indicated by Q and are connected to a resistance measurement device 49. As a result of the enormous increase in resistance of PTC sensor 14 connected to a single cell 7 when there is an abnormal rise in temperature in one of the aforementioned 126 single cells 7, this abnormality can be detected by resistance measurement device 49. Consequently, by means of a straightforward construction in which the number of external lead-out wires 47, 48 is a minimum of two, it is possible to detect abnormal rise in temperature of all the single cells 7 of battery power source 6. A like arrangement is provided in the other battery power source device 6 constituting battery power source assembly 8.

As shown in Fig. 3, Fig. 7, Fig. 8 and Fig. 9, both ends of 21 battery modules 9 are fixed and supported in the first end plate 19 and second end plate 20 in the holder casing 10 of battery power source device 6. Also, battery modules 9 are supported in insertion holes 25a of the partitions 25, 25 by means of anti-vibration rings 51, 51 at two locations at positions about 1/3 of their lengths respectively from both ends in their longitudinal directions. These anti-vibration rings 51 are integrally formed on anti-vibration rubber sheet 22 in such a way that they project from its front surface. Anti-vibration rubber sheet 22, which is provided with 21 anti-vibration rings 51 is mounted along one face of partition 25 by pressing in all the anti-vibration rings 51 into insertion holes 25a of partition 25.

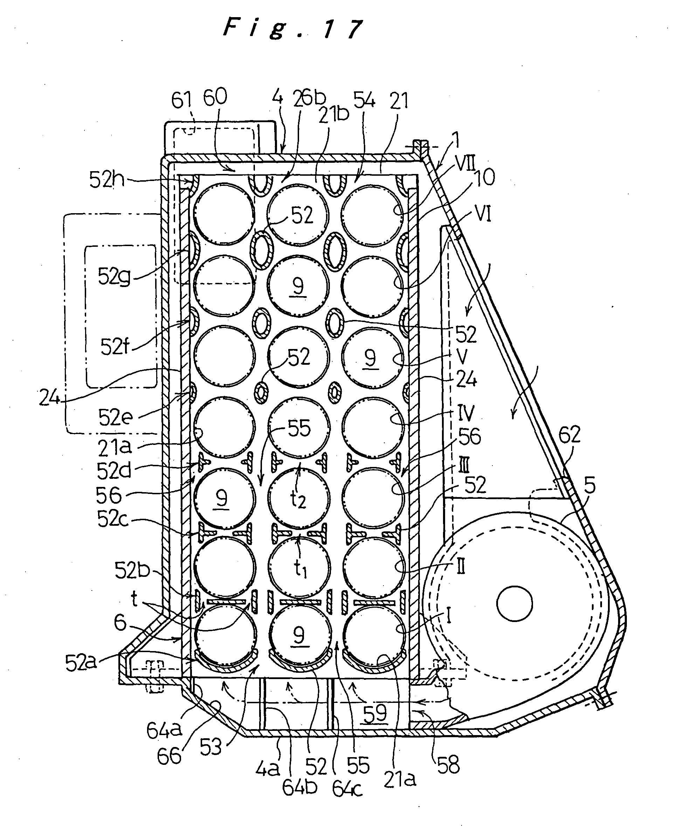

As already described, holder casing 10 is partitioned into three spaces by means of two partitions 25, 25. Specifically, in order from the second end plate 20 to the first end plate 19, these are first partitioned space 26a, second partitioned space 26b, and third partitioned space 26c. In the middle of each partitioned space 26a, 26b, 26c, a cooling adjustment fin plate 21 is inserted from above and fixed to main casing body 18. Fig. 8 and Fig. 17 show the relationship of cooling adjustment fins 52 (including first stage fin 52a, second stage fin 52b, third stage fin 52c, fourth stage fin 52d, fifth stage fin 52e, sixth stage fin 52f, seventh stage fin 52g, and eighth stage fin 52h) that are formed on cooling adjustment fin plate 21 and battery modules 9 that are freely inserted in insertion holes 21a of cooling adjustment fin plate 21. As is well known, means are required in battery power source device 6 for cooling the batteries in order to prevent abnormal rise in temperature produced by evolution of heat by the batteries. In this embodiment, the lower aperture of holder casing 10 constitutes an air introduction section 53 while its upper aperture constitutes an air extraction section 54. Cooling of the battery modules 9, which are arranged horizontally in seven vertical rows and three transverse rows is performed by means of an air current flowing from the bottom (upstream side) to the top (downstream side).

The cooling structure of battery modules 9 will be described taking as an example second partitioned space 26b which is located in the middle. As shown in Fig. 7 and Fig. 8, cooling adjustment fins 52 project in both directions from the main plate body 21 of cooling adjustment fin plate 21 and extend to a position adjacent partitions 25, 25 so as to adjust the direction of flow and the flow rate of the air current. As shown in Fig. 17, a first stage fin 52a is provided that is arcuate in cross-section about the bottom side of three respective insertion holes 21a I (the seven insertion holes from the first stage to the seventh stage are respectively indicated by I-VII in Fig. 17) of the lowest stage (also called the first stage), as shown in Fig. 17, as to severely reduce the ratio of the amount of air directly incident on to first-stage battery module 9.

A second-stage fin 52b, third stage fin 52c, and fourth stage fin 52d of flat H-shape with an interruption section in cross-section are provided in vertically intermediate positions between corresponding insertion holes in, respectively, first stage three insertion holes I and the second stage three insertion holes II thereabove, second stage three insertion holes II and the third stage three insertion holes III thereabove, and third stage three insertion holes III and the fourth stage three insertion holes IV thereabove. Second stage fin 52b is formed with interrupting sections t, t on both sides of the portion of H-shaped cross-section; third stage fin 52c is formed with an interrupting portion t₁ in the middle of the portion of H-shaped cross-section; and fourth stage fin 52d is formed with an interrupting portion t₂ of greater width in the middle of the portion of H-shaped cross-section. In this way, the ratio of air directly striking second stage battery module 9 is increased from that in the case of first stage battery module 9; the ratio of air directly striking third stage battery module 9 is increased from that of second stage battery module 9; and the ratio of air directly striking fourth battery module 9 is increased from that of third stage battery module 9.

Between the three insertion holes IV of the fourth 10 stage and the three insertion holes V of the fifth stage on top of these, there are provided fifth stage fins 52e consisting of four fins arranged next to each other transversely and consisting of two fins of vertically elongate elliptical cross-sectional shape (those shown in Fig. 17 are hollow in cross-section in order to reduce weight, but fins which are not hollow could be employed) and two fins of vertically elongate semi-elliptical cross-section (which could be hollow or not). The two fins of vertically elongate elliptical cross-section that are positioned in the middle are arranged at the centre-points of the four insertion holes IV, IV, V, V in the vertical and horizontal directions of their respective peripheries, while the two fins of vertically elongate semi-elliptical cross-section that are positioned at both ends are located on the outside vertically in the middle of corresponding vertical insertion apertures IV and V, so as to make contact with the side edge of main plate and body section 21b. Between the three insertion holes V of the fifth stage and the three insertion holes VI of the sixth stage on top of these and between the three insertion holes VI of the sixth stage and the three insertion holes VII of the seventh stage on top of these, there are provided six stage fins 52f and seven stage fins 52g consisting of four fins in the same relative positions and of practically the same shape as fins 52e of the fifth stage. Further, in positions above the three insertion holes VII of the uppermost stage (which may also be called the seventh stage), there are provided eighth stage fins 52 is consisting of four fins in the same positional relationship as seventh stage fins 52g, being fins of a shape wherein the upper half of the fins of seventh stage fins 52g is omitted. The cross-sectional area of the fins of sixth stage fins 52f is larger than the cross-sectional area of the fins of fifth stage fins 52e and the cross-sectional areas of the fins of seventh stage fins 52g is larger than the cross-sectional area of the fins of sixth stage fins 52f. By thus making the cross-sectional areas of cooling adjustment fins 52e, 52f, 52g larger as one goes upwards, the flow path of the air current formed between battery module 9 and cooling adjustment fins 52 is throttled as one goes further in the upwards direction, so that the flow rate of air flowing through the peripheral region of battery module 9 of the fifth stage is larger than the flow rate of air flowing through the peripheral region of battery module 9 of the fourth stage, the flow rate of air flowing through the peripheral region of sixth stage battery module 9 is increased from the flow rate of air flowing through the peripheral region of the battery module 9 of the fifth stage, and the flow rate of air flowing through the peripheral region of the seventh stage battery module is greater than the flow rate of air flowing through the peripheral region of battery module 9 of the sixth stage. This utilises the fact that, when the flow rate of an air current increases, its cooling effect increases in proportion to the square root.

The air cooling structure of battery modules 9 was described above taking as example the case of second partitioned space 26b; however, the air cooling structure in the other, namely, the first partitioned space 26a and third partitioned space 26c is constructed in the same way, In each case, of the large number of battery modules 9 arranged in multiple stages in parallel in a direction at right angles to the air current flowing upwards from below, regarding the battery modules 9 belonging to the lower-stage side groups (in the case shown in Fig. 17,,those arranged in stages 1 to 4) the bottom sides of battery modules 9 are covered by screening fins 52a-52d that adjust the quantity of air that is directly incident on battery modules 9 and the quantity of air striking battery modules 9 is arranged to progressively increase as one goes from the lowest stage (stage 1) to the upper stages (second stage, third stage, fourth stage) . In this way, over-cooling of battery modules 9 in the lowest stage is prevented and the amount of air striking battery modules 9 is increased going towards the upper stages so as to compensate for the lowering in cooling effect of the air produced by the gradual rise in temperature due to the heat evolved by the batteries. Cooling of battery modules 9 of each stage (stage 1 stage 4) can be thus arranged to be performed practically evenly.

As shown in Fig. 17, most of the air that cools the battery modules 9 belonging to the lower group rises through passages 55, 55 formed between the left and right battery modules 9 and the passages 56, 56 formed between battery modules 9 and side wall 24. Some of it is extracted to battery modules 9 and is then again merged with passages 55, 56, reaching the underside of fifth-stage battery modules 9. Next, the air current is employed to cool battery modules 9 belonging to the upper-stage group (in the case shown in Fig. 17, those modules which are arranged in the fifth to seventh stages); however, since it has already cooled the battery modules 9 of the four stages belonging to the lower group, the air temperature is fairly high, so the cooling effect is lowered. In order to compensate for this, for cooling of the battery modules 9 belonging to the upper-stage group, the air current is throttled, so as to raise the flow speed of the air current around battery modules 9. Above passages 55, 55, 56, 56, there are arranged flow-path throttling type fins 52e - 52h in order to raise the flow speed of the air current by narrowing the gaps between battery modules 9, being arranged diagonally below battery modules 9 of the fifth, sixth and seventh stages and diagonally above battery modules 9 of the seventh stage. Also, these gaps are made progressively narrower going towards the upper stages (fifth stage, sixth stage and seventh stage) to raise the flow rate of the air current around battery modules 9 as to compensate for the loss of cooling effect of the air as it is gradually heated up as it rises: thus practically uniform cooling of the battery modules 9 in each stage (fifth stage seventh stage) can be achieved.

In this way, a construction is obtained in which all the battery modules 9 are cooled practically uniformly from the lowest stage to the highest stage. It should be noted that although, in this embodiment, a construction was adopted in which practically uniform cooling of all the battery modules 9 was achieved by using screening fins 52a ~ 52d for the lower four stage battery modules 9 and flow-path throttling fins 52e ~ 52h for the upper three stage battery modules 9, adjustment of the air flow etc. would of course be possible by for example using screening fins for the lower three stage battery modules 9, providing no fins corresponding to the battery modules 9 in the fourth, intermediate stage, and employing flow path throttling fins for battery modules 9 in the upper three stages.

Since the batteries used in this embodiment are nickel-hydrogen secondary cells, it is necessary to devise safety measures in respect of hydrogen leakage in the event of abnormality from the battery cans. The air is fed into battery power source device 6 by pressure feed by a fan 5 equipped with a sirocco fan. However, it is in particular vital to give consideration to ensuring that hydrogen cannot be fed into the vicinity of fan 5 and the interior of motor 57 that drives this and/or their vicinity. Accordingly, in this embodiment, as shown in Fig. 8, Fig. 17 and Fig. 18, fan 5 and motor 57 are arranged to the side and underneath holder casing 10 and fan aperture 58 is arranged below holder casing 10, so that air that is pressure-fed from fan 5 passes through air supply chamber 59 formed below outer casing 4, and reaches air introduction section 53 at the bottom end of holder casing 10 10, and then cools battery modules 9 by flowing through holder casing 10 from the bottom to the top, then issues from air extraction section 54 of holder casing 10, after which it passes through air discharge chamber 60 formed above outer casing 4 and is discharged to the outside of outer casing 4 from a discharge port 61 formed in the upper side end of outer casing 4. By the adoption of this construction, even if hydrogen should escape from battery modules 9 within holder casing 10, delivery of hydrogen to fan 5 can be prevented.

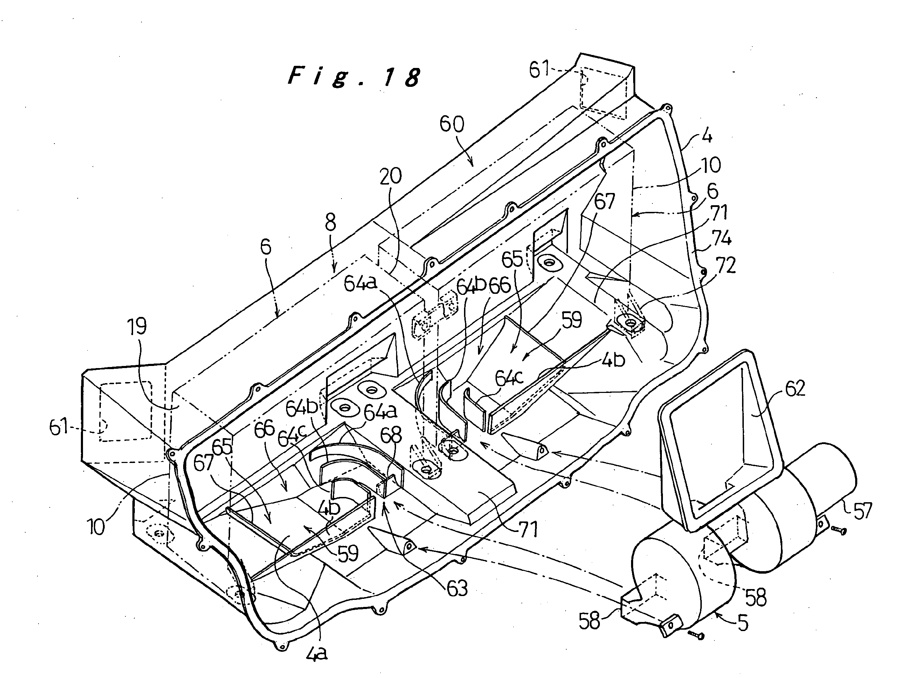

Fig. 18 shows a construction in which cooling air is pressure-fed to left and right battery power source devices 6, 6 by a single fan 5. Fan 5 is equipped with a pair of left and right sirocco fans and fan apertures 58, 58; it extracts air within the vehicle from air extraction port 62 and feeds air uniformly from the pair of fan apertures 58, 58 into left and right air supply chambers 59, 59.

Air supply chambers 59 are constituted by a space S enclosed by a bottom sheet part 4a of outer casing 4, the front wall 4b that stands erect in a front position in Fig. 18 of bottom sheet 4a, and the bottom face of holder casing 10. At an inlet 63 facing fan aperture 58, there are provided a plurality of curved flow alignment guides 64a, 64b, 64c erected on bottom sheet 4a for guiding air from fan aperture 58 inwards and sideways. Inlet 63 is arranged in the middle in the width direction of outer casing 4, being arranged so as to be positioned below first partitioned space 26a of holder casing 10. Bottom sheet 4a is formed so that, within air supply chamber 59, it has a slope 65 going gradually upwards towards the outside i.e. towards second partitioned space 26b and third partitioned space 26c, and has a slope 66 going gradually upwards towards the inside. An air current direction guide 67 of small height that leads the air upwards is provided at a position on slope 65 below the boundary of second partitioned space 26b and third partitioned space 26c (see Fig. 8).

The air that is extracted from inlet 63 is fed through two air passages formed in each space between the three flow alignment guides 64a, 64b and 64c into the inside and into second and third partitioned spaces 26b, 26c, while part of it is fed into first partitioned space 26a. In order to prevent that this air current goes straight through the air passage and there is insufficiency of the amount of air fed into first partitioned space 26a, there is provided an air current direction guide 68 that directs the air upwards in the vicinity of the inlet to the air passage nearest second end plate 20. Of the air that issues from the two air passages, some is fed into second partitioned space 26b while the remainder is fed to underneath the third partitioned space 26c. Air current direction guide 67 is provided in order to ensure that there is no insufficiency in the amount of air that is fed into second partitioned space 26b at this point. The air that is led to below third partitioned space 26c is then led into third partitioned space 26c.

Thus, by providing flow alignment guides 64a, 64b, 64c and air current direction guides 67, 68, and slopes 65, 66, the amount of air that is introduced into partitioned spaces 26a, 26b, 26c is made practically uniform and the possibility of the amount of air drawn in at the front and the inside in each partitioned space being non-uniform is avoided. It should be noted that, since the two single cells 7 arranged within the second partitioned space 26b are in the centre position of battery module 9, it is necessary to apply more cooling to them by means of the air current than in comparison with the single cells 7 arranged in first and third partitioned spaces 26a, 26c, owing to the effect of evolution of heat from these single cells 7 arranged in first and third partitioned spaces 26a, 26c.

It is therefore desirable to design air current direction guide 67 such as to make the amount of air is directed into second partitioned space 26b rather larger than the amount of air that is directed into the other partitioned spaces 26a, 26c.

As shown in Fig. 18 and Fig. 8, outer casing 4 is provided with a holder casing mounting seat 71 on its bottom sheet 4a and the left and right holder casings 10, 10 are mounted and fixed in a foot portion 72 thereof by means of bolts and nuts 73. Also, a flange 74 is provided mounted on the main automobile body at the periphery of outer casing 4.

In the above embodiment, as shown in Fig. 15, all the battery modules 9 in battery power source device 6 are constantly connected electrically in series. However, for purposes of safety during repair work etc. it is convenient to provide a safety plug 75 in order to cut off temporarily this series connection. For this purpose, as shown by the imaginary line in Fig. 15, a bypass may be provided whereby the locations indicated by 17a and 17b and an openable safety plug 75 are connected by leads 76, 77 by for example severing S17 bus bars 28 at a location indicted by N in subsequent processing, after exposing these at an aperture provided in first end plate 19.

With the present invention, the support strength and rigidity of the battery modules can be enormously improved and a battery power source device and end plates for use therein can be provided whereby the battery modules can be assembled in the holder casing in a simple manner and without any possibility of their being wrongly inserted.

Also with the present invention, the problem of occurrence of twisting between the single cells constituting the battery modules on locking the battery modules to the bus bars can be solved and the benefit can be obtained that voltage detection of the battery modules and/or detection of abnormal rise in temperature of the single cells can be achieved efficiently by means of a straightforward construction. Furthermore, with the present invention, uniform cooling can be performed of the battery modules which are arranged parallel to each other in large numbers in the holder casing, and cooling that is uniform as between the single cells constituting the battery modules can also be achieved.

In particular, with the present invention, the problem that the cooling effect of the cooling air is lowered because of its increased temperature on the downstream side compared with the upstream side is solved, thereby making it possible to effect uniform cooling of the battery modules whether they are on the upstream side or downstream side. Furthermore, efficient utilisation of the air current can be achieved by preventing over-cooling of the battery modules on the upstream side.

Furthermore, with the present invention, cooling of a battery power source employing nickel-hydrogen secondary cells can be performed whilst maintaining safety in regard to hydrogen.

Moreover, cooling of a battery power source assembly comprising a pair of battery power source devices can be performed in a uniform manner for all the battery modules by using only a single pressure-feed fan.

## Claims

1. A battery power source comprising a cooling device and a large number of battery modules (9), constituted by a plurality of single cells (7) connected in a row electrically and mechanically in series, arranged parallel to each other and held in a holder casing (10) wherein air is forcibly made to flow in one direction within said holder casing (10) thereby cooling the large number of battery modules (9) in said holder casing (10), the direction of flow of the air is in a direction at right angles to the longitudinal direction of said battery modules (9), and wherein means for flow alignment are arranged within said holder casing (10) such that the flow speed of the air flowing through said holder casing (10) is faster on the downstream side than on the upstream side.

2. A battery power source according to claim 1, in which, at a location on the downstream said in said holder casing (10), the flow path area is progressively diminished such that the flow speed of air flowing through said holder casing (10) gradually becomes larger in the direction of flow of the air.

3. A battery power source comprising a cooling device and a large number of battery modules (9), constituted by a plurality of single cells (7) connected in a row electrically and mechanically in series, arranged parallel to each other and held in a holder casing (10) and air is forcibly made to flow in one direction within said holder casing (10) thereby cooling the large number of battery modules (9) in said holder casing (10), the direction of flow of the air is in a direction at right angles to the longitudinal direction of said battery modules (9), and wherein means for screening are arranged in said holder casing (10) such that the area of said battery modules (9) that is exposed to the air flowing through said holder casing (10) becomes greater from the upstream to the downstream side.

4. A battery power source according to claim 3, in which means for screening are arranged only at a location on the upstream side within said holder casing (10) , the means for screening being constituted such that the area of said battery modules (9) that is exposed to air flowing through said holder casing (10) gradually becomes larger going in the direction in which the air is flowing.

5. A battery power source comprising a cooling device and a pair of left and right battery power source devices (6) constituted by holding a large number of battery modules (9) consisting of a plurality of single cells (7) connected in a row electrically and mechanically in series arranged horizontally and parallel to each other in a holder casing (10), respective air supply chambers (59) being formed below said holder casings (10) wherein air is fed to a lower aperture of the holder casing (10) of the respective battery power source devices (6) through left and right air supply chambers (59) from a pressure-feed fan (5) so that the battery module (9) is cooled by the air current that is discharged from an upper aperture after rising through said holder casings (10) wherein the pressure-feed fan (5) has two blowing ports (58) that supply air in the direction parallel to the end plates (19, 20) into said respective battery power source devices (6), these blowing ports (58) opening in positions close to a respective one end plate (19, 20) of the battery power source devices (6), the bottom faces of the air supply chambers (59) being formed with a slope (65) whereby the cross-sectional area of the flow path gradually diminishes from the one end plate side towards the other end plate side, and wherein means for flow alignment are arranged within said holder casing (10) whereby the flow rate of the air flowing within said holder casing (10) is faster at the upper than at the lower side.

6. A battery power source according to claim 5, wherein the flow path area is gradually diminished at a location in the upper part in said holder casing (10) such that the flow speed of air flowing in said holding casing (10) gradually gets larger in the direction in which the air is flowing.

7. A battery power source comprising a cooling device and a pair of left and right battery power source devices (6) constituted by holding a large number of battery modules (9) consisting of a plurality of single cells (7) connected in a row electrically and mechanically in series arranged horizontally and parallel to each other in a holder casing (10), respective air supply chambers (59) being formed below said holder casing (10) wherein air is fed to a lower aperture of the holder casing (10) of the respective battery power source devices (6) through left and right air supply chambers (59) from a pressure-feed fan (5) so that the battery module (9) is cooled by the air current that is discharged from an upper aperture after rising through said holder casings (10) wherein the pressure-feed fan (5) has two blowing ports (58) that supply air in the direction parallel to the end plates (19, 20) into said respective battery power source devices (6), these blowing ports (58) opening in positions close to a respective one end plate (19, 20) of the battery power source devices (6) , the bottom faces of the air supply chambers (59) being formed with a slope (65) whereby the cross-sectional area of the flow path gradually diminishes from the one end plate side towards the other end plate side, and wherein means for screening are arranged in the holder casing (10) whereby the area of the battery modules (9) that is exposed to the air flowing through said holder casing (10) is greater in the upper part than in the lower part.

8. A cooling device for a battery power source according to claim 7 wherein means for screening are arranged only in a location of the bottom part in said holder casing (10), the means for screening being constructed such that the area of the battery modules (9) that is exposed to the air flowing through said holder casing (10) gradually gets larger in the direction of flow of the air.
